# EUROPEAN PATENT SPECIFICATION

(11) **EP 4 421 610 B1**
(45) Date of publication and mention of the grant of the patent: **27.05.2026**
(21) Application number: 23189939.4
(22) Date of filing: 07.08.2023
(51) Int. Cl.: G06F 3/12

(54) **PRINTING SYSTEM, PRINTING METHOD, METHOD FOR MANUFACTURING PRINTED MATTER, AND CONTROL DEVICE**
DRUCKSYSTEM, DRUCKVERFAHREN, VERFAHREN ZUR HERSTELLUNG VON DRUCKSACHEN UND STEUERUNGSVORRICHTUNG
SYSTÈME D'IMPRESSION, PROCÉDÉ D'IMPRESSION, PROCÉDÉ DE FABRICATION DE MATIÈRE IMPRIMÉE ET DISPOSITIF DE COMMANDE

(30) Priority: 21.02.2023 JP 2023025397
(43) Date of publication of application: 28.08.2024
(73) Proprietor: FUJIFILM Business Innovation Corp., Minato-ku Tokyo (JP)
(72) Inventor: WADA, Masanori, Yokohama-shi, Kanagawa (JP)
(74) Representative: Kurig, Thomas

(56) References cited:
- CN-U- 217 200 376
- JP-A- 2013 082 133
- US-A1- 2022 269 914

## Description

### BACKGROUND OF THE INVENTION

### (i) Field of the Invention

The present invention relates to a printing system, a printing method, a method for manufacturing a printed matter, and a control device.

### (ii) Description of Related Art

JP6459571B discloses an image forming system that includes a delivery device which is movable independently of an image forming device and which delivers a printed matter output from the image forming device to a destination and that divides a print job and controls the amount of printing so as not to exceed a loading weight in a case in which it is determined that the weight of the printed matter to be output exceeds the maximum loading weight of the delivery device.

JP6391357B discloses a printing system that includes a loading unit on which a sheet having an image printed thereon is loaded, determines whether or not it is possible to transfer the sheet already loaded on the loading unit in a case in which it is detected that it is not possible to load the sheet on the loading unit during execution of a print job, and stops the loading of the printed sheet on the loading unit in a case in which it is not possible to transfer the sheet.

JP2022-070211A discloses a printing overall management device that is connected to a transport management device, which manages a plurality of unmanned transport devices for transporting a sheet loading device on which the sheet discharged from a printing machine can be loaded, to be communicable with the transport management device. The printing overall management device generates transport instruction information including identification information of a plurality of sheet loading devices that execute one job and at least one of the order of the sheet loading devices, on which the sheets discharged from the printing machine are loaded, or the order of the sheet loading devices which supply the sheets to the next processing machine.
US 2022/269914 A discloses a printing control apparatus including a processor configured to receive instruction information including print data and post-processing information indicating content of post-processing scheduled to be performed on paper on which an image based on the print data is printed, and, in a case where the post-processing included in the instruction information is not performed by a post-processing apparatus, generate an auxiliary image that assists a user to perform the post-processing, based on the post-processing information, and print the auxiliary image, together with the image based on the received print data, on the paper.
JP 2013-082133 A discloses an image forming apparatus receiving second print data after starting a printout based on first print data consisting of a plurality of pages before completing the printout, and extracting a page to be replaced from the first print data in the plurality of pages contained in the second print data as a replacement page. Then, when an original page of the first print data corresponding to the replacement page extracted is determined to be not yet outputted, the image forming apparatus replaces the original page with the replacement page and prints it out.
CN 217200376 U discloses an automatic unmanned operating system of gathering pages of wisdom seal factory including a printing machine, a station board, a robotic arm, semi-manufactured goods warehouse deposit district, cementing production line, AGV dolly and a central control dispatch system.

### SUMMARY OF THE INVENTION

In a printing factory, various devices, such as a printing device, a cutting device, a bookbinding device, and an enclosing device, are used to perform various steps such as printing, processing, and shipping. A technique has been proposed which automatically transports a printed matter in order to reduce unnecessary work between these steps. For example, the following is considered: a robot arm automatically loads a printed matter output from a printing device onto a carriage, and the carriage is automatically transported. In this case, in a step in which post-processing is performed after the printed matter is transported, it is determined whether it is possible to start work in a stage in which a part of the printed matter has been transported or it is not possible to start work until all of the printed matter is transported.

An object of the present invention is to prevent the manufacture of a defective product caused by a shortage of a printed matter in a post-processing step.

The present invention is defined in the appended claims. The following disclosure serves a better understanding of the present invention.

### BRIEF DESCRIPTION OF THE DRAWINGS

Exemplary embodiment(s) of the present invention will be described in detail based on the following figures, wherein:
Fig. 1 is a diagram showing an example of a configuration of a printing system according to a present exemplary embodiment;
Fig. 2 is a diagram showing an example of a hardware configuration of a computer that is used as a printing management unit, a loading management unit, a transport management unit, and an overall management unit according to the present exemplary embodiment;
Fig. 3 is a diagram showing an example of a functional configuration of the overall management unit according to the present exemplary embodiment;
Fig. 4 is a flowchart showing an example of a flow of a process during printing;
Fig. 5 is a flowchart showing an example of a flow of a process of controlling a time when post-processing is started; and
Fig. 6 is a sequence diagram showing an example of a flow of a process of a control unit from the start of printing to the start of post-processing.

### DETAILED DESCRIPTION OF THE INVENTION

Hereinafter, an exemplary embodiment of the present invention will be described in detail with reference to the accompanying drawings.

### <Configuration of Printing System>

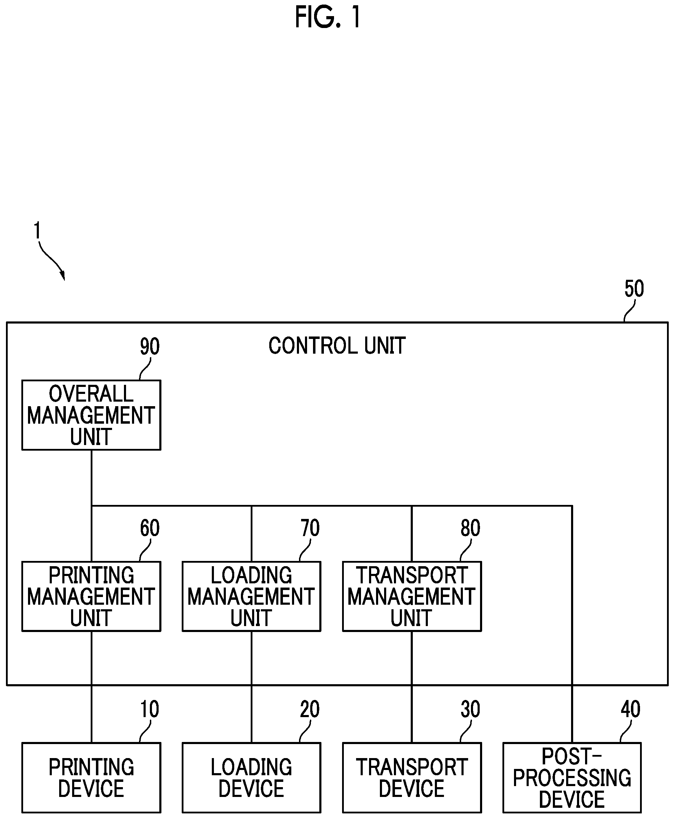

Fig. 1 is a diagram showing a configuration of a printing system according to the present exemplary embodiment.

A printing system 1 includes a printing device 10, a loading device 20, a transport device 30, and a post-processing device 40. In addition, the printing system 1 includes a control unit 50 that controls the printing device 10, the loading device 20, the transport device 30, and the post-processing device 40.

The control unit 50 includes a printing management unit 60 that manages the printing device 10, a loading management unit 70 that manages the loading device 20, a transport management unit 80 that manages the transport device 30, and an overall management unit 90 that performs the overall management of the printing management unit 60, the loading management unit 70, the transport management unit 80, and the post-processing device 40.

The printing device 10, the loading device 20, the transport device 30, and the post-processing device 40 are configured to be communicable with the control unit 50 through a network. The type of the network is not particularly limited as long as the network can transmit and receive data. For example, the network may be the Internet, a local area network (LAN), or a wide area network (WAN). A communication line used for data communication may be wired or wireless. In addition, each device may be configured to be connected through a plurality of networks or communication lines.

The printing device 10 is a device that has a printer function of printing an image on a recording medium, such as paper, and outputting the recording medium as a printed document. The printing device 10 may have other image processing functions, such as a scanner function and a facsimile function, in addition to the printer function. Further, the printing device 10 may be capable of performing color printing or may perform only monochrome printing. The printing device 10 performs printing in response to an instruction from the printing management unit 60 and outputs a printed matter.

The loading device 20 is a device that loads the printed matter output by the printing device 10 on the transport device 30. The loading device 20 is configured by, for example, a robot arm, picks up the printed matter output by the printing device 10 with the arm, and loads the printed matter on the transport device 30. The loading device 20 loads the printed matter on the transport device 30 in response to an instruction from the loading management unit 70.

In addition, the loading device 20, the loading management unit 70, and a loading instruction unit 93, which will be described later, may not be provided, and the printed matter which has been printed and output by the printing device 10 may be placed on the transport device 30 as it is.

The transport device 30 is a device that transports the printed matter output by the printing device 10. The transport device 30 transports the printed matter in response to an instruction from the transport management unit 80. The number of transport devices 30 may be one, or a plurality of transport devices 30 may be provided.

The transport device 30 is composed of, for example, a carriage on which the printed matter is loaded and an automatic transport device that transports the carriage. The printed matter output by the printing device 10 is loaded on the carriage by the loading device 20, and the automatic transport device travels on a predetermined route in response to an instruction from the transport management unit 80.

The predetermined route is a route that connects the printing device 10 and the post-processing device 40. In this way, the printed matter output by the printing device 10 is transported to the post-processing device 40. Further, in a case in which there are a plurality of post-processing devices 40, the transport device 30 also transports the printed matter between different post-processing devices 40.

In addition, the transport device 30 is not limited to the configuration in which the transport device 30 transports the printed matter in a loaded state. For example, the transport device 30 may be configured by a robot arm, may pick up the printed matter output by the printing device 10 with the arm, and may transport the printed matter in a picked-up state.

The post-processing device 40 is a device that performs post-processing on the printed matter transported by the transport device 30. The post-processing device 40 is a device that performs processing on the printed matter, such as a cutting device, a bookbinding device, or a laminating device. Further, the post-processing device 40 may be a device that performs a process for shipping the printed matter, such as a packing device. A plurality of types of post-processing devices 40 may be provided and may perform a plurality of types of post-processing on the printed matter. Alternatively, one post-processing device 40 may be provided.

The post-processing device 40 performs the post-processing on the printed matter in response to an instruction from the overall management unit 90. The post-processing device 40 has, for example, a panel (not shown) for displaying an instruction from the overall management unit 90. The panel is implemented by, for example, a display mechanism 105 which will be described below. An operator starts or stops the post-processing using the post-processing device 40 according to the instruction displayed on the panel. Further, the post-processing device 40 may automatically start or stop the post-processing in response to an instruction from the overall management unit 90.

The control unit 50 controls the printing device 10, the loading device 20, the transport device 30, and the post-processing device 40. The control unit 50 includes the printing management unit 60, the loading management unit 70, the transport management unit 80, and the overall management unit 90.

The printing management unit 60, the loading management unit 70, the transport management unit 80, and the overall management unit 90 are implemented by, for example, a computer. These units may be implemented by a single computer or by a distribution process by a plurality of computers.

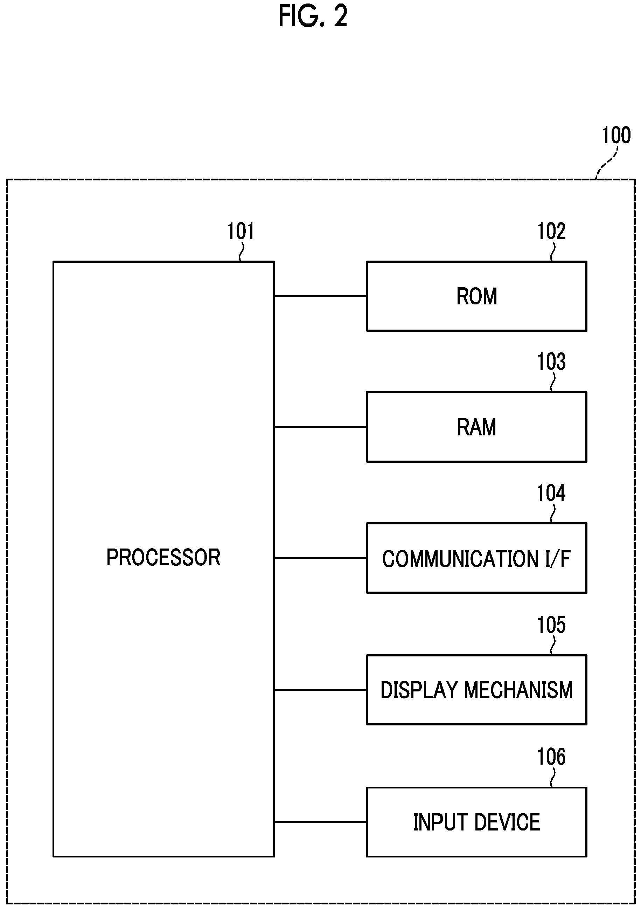

Fig. 2 is a diagram showing an example of a hardware configuration of a computer 100 that is used as the printing management unit 60, the loading management unit 70, the transport management unit 80, and the overall management unit 90. The computer 100 includes a processor 101, a read only memory (ROM) 102, and a random access memory (RAM) 103. The processor 101 is, for example, a central processing unit (CPU) and execute a program read from the ROM 102, using the RAM 103 as a work area. Further, the computer 100 includes a communication interface 104 for connection to the network and a display mechanism 105 for display output to a display. In addition, the computer 100 includes an input device 106 that is used by an operator of the computer 100 to perform an input operation. Further, the display mechanism 105 and the input device 106 may be configured to be remotely operated. In addition, the configuration of the computer 100 shown in Fig. 2 is only an example, and the computer used in the present exemplary embodiment is not limited to the example of the configuration shown in Fig. 2.

The printing management unit 60 manages the printing device 10. The printing management unit 60 is configured to be communicable with the overall management unit 90 and the printing device 10.

In a case in which a printing instruction from the overall management unit 90 is received, the printing management unit 60 directs the printing device 10 to perform or stop printing on the basis of the received printing instruction.

The loading management unit 70 manages the loading device 20. The loading management unit 70 is configured to be communicable with the overall management unit 90 and the loading device 20.

In a case in which a loading instruction is received from the overall management unit 90, the loading management unit 70 gives an instruction to load the printed matter output by the printing device 10 on the transport device 30 to the loading device 20 on the basis of the received loading instruction.

The transport management unit 80 manages the transport device 30. The transport management unit 80 is configured to be communicable with the overall management unit 90 and the transport device 30.

In a case in which the transport management unit 80 receives a transport instruction from the overall management unit 90, the transport management unit 80 moves the transport device 30 on the basis of the received transport instruction. In addition, the transport management unit 80 grasps a transport situation, such as a position of the moved transport device 30 after the movement, and notifies the overall management unit 90 of the transport situation.

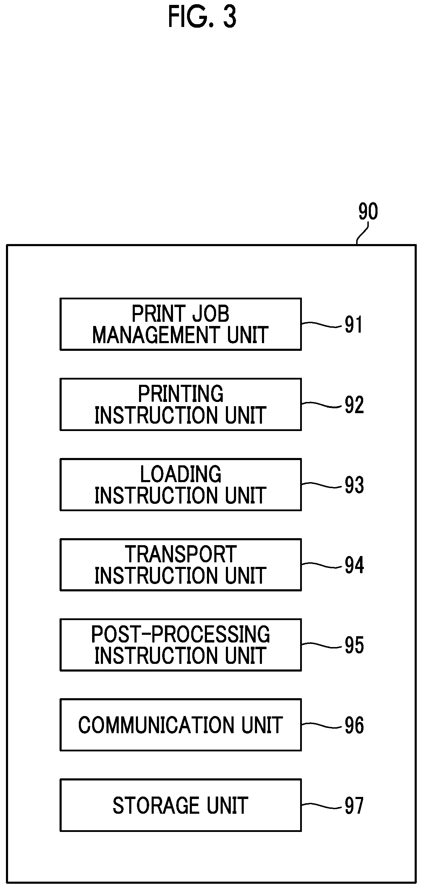

The overall management unit 90 performs the overall management of the printing management unit 60, the loading management unit 70, the transport management unit 80, and the post-processing device 40. Functions of the overall management unit 90 will be described with reference to Fig. 3. Fig. 3 is a diagram showing an example of a functional configuration of the overall management unit 90 according to the present exemplary embodiment.

The overall management unit 90 includes a print job management unit 91 that manages a print job, a printing instruction unit 92 that issues an instruction to the printing management unit 60, a loading instruction unit 93 that issues an instruction to the loading management unit 70, a transport instruction unit 94 that issues an instruction to the transport management unit 80, a post-processing instruction unit 95 that issues an instruction to the post-processing device 40, a communication unit 96 that communicates with the printing management unit 60, the loading management unit 70, the transport management unit 80, and the post-processing device 40, and a storage unit 97 that stores the print job.

The overall management unit 90 receives a print job from, for example, an external device (not shown) through the communication unit 96. Further, the overall management unit 90 may be configured to receive the print job input by an operation on an operation panel (not shown). The operation panel is implemented by, for example, the input device 106. Information of the received print job is stored in the storage unit 97.

The print job management unit 91 manages various types of information necessary for executing the received print job. For example, the print job management unit 91 manages information of paper necessary for executing the print job and information of a processing step.

Examples of the information of the paper include a paper size, a paper type, the number of sheets to be printed, and the number of copies to be printed.

Examples of the information of the processing step include the position of the transport device 30, the transport order of the printed matters by the transport device 30, and the type of post-processing.

In addition, the print job management unit 91 calculates the number of copies of the printed matter output by the printing device 10 related to the execution of the print job. Further, the print job management unit 91 calculates the number of transport operations of the transport device 30 required to transport the printed matter.

The printing instruction unit 92 issues a printing instruction on the basis of, for example, various types of information managed by the print job management unit 91, the number of output copies calculated by the print job management unit 91, and the number of transport operations. The printing instruction from the printing instruction unit 92 is transmitted to the printing management unit 60 through the communication unit 96.

For example, in a case in which the transport device 30 is not present at a position (loading position) where the printed matter is loaded, the printing instruction unit 92 issues an instruction to stop printing by the printing device 10.

Further, for example, in a case in which the number of copies of the printed matter output by the printing device 10 is larger than the capacity of the printed matter that can be loaded on the transport device 30, the printing instruction unit 92 issues an instruction for the printing device 10 to perform printing up to the capacity of the printed matter that can be loaded on the transport device 30 and to pause printing. Then, in a case in which a new transport device 30 that can transport the printed matter is present at the loading position in a state in which the printing is paused, the printing instruction unit 92 issues an instruction to restart the printing by the printing device 10.

In addition, the printing instruction unit 92 may issue an instruction related to the output order of the printed matters. For example, in a case in which the printed matters having a plurality of types of paper sizes are output, the printing instruction unit 92 issues an instruction to output the printed matters in descending order of the paper size of the printed matter. In accordance with this, the printed matters to be loaded on the transport device 30 are loaded such that the paper with a large size which has been output first is loaded on the bottom. Therefore, it is possible to prevent the collapse of the loaded printed matters during transport.

The loading instruction unit 93 issues an instruction to load the printed matter output by the printing device 10 on the transport device 30 on the basis of the printing instruction from the printing instruction unit 92. The loading instruction from the loading instruction unit 93 is transmitted to the loading management unit 70 through the communication unit 96.

The transport instruction unit 94 issues a transport instruction on the basis of, for example, various types of information managed by the print job management unit 91 and the number of output copies and the number of transport operations which are calculated by the print job management unit 91. The transport instruction from the transport instruction unit 94 is transmitted to the transport management unit 80 through the communication unit 96.

For example, the transport instruction unit 94 gives an instruction to move the transport device 30 on the basis of the transport order of the printed matters by the transport device 30. In addition, in a case in which the transport device 30 that can transport the printed matter is not present at the loading position, the transport instruction unit 94 gives an instruction to move the transport device 30 that can transport the printed matter to the loading position.

The post-processing instruction unit 95 issues a post-processing instruction on the basis of, for example, various types of information managed by the print job management unit 91 and the number of output copies and the number of transport operations which are calculated by the print job management unit 91. The post-processing instruction from the post-processing instruction unit 95 is transmitted to the post-processing device 40 through the communication unit 96.

In a case in which the printed matter has been transported to the post-processing device 40 by the transport device 30, the post-processing instruction unit 95 issues an instruction related to whether or not the post-processing may be started.

For example, in a case in which the number of copies of the printed matter output by the printing device 10 is smaller than the capacity of the printed matter that can be loaded on the transport device 30, the transport device 30 transports the printed matter output by the printing device 10 with one transport operation. In this case, the post-processing instruction unit 95 issues an instruction to start the post-processing in a case in which the printed matter is transported to the post-processing device by the transport device 30.

On the other hand, in a case in which the number of copies of the printed matter output by the printing device 10 is larger than the capacity of the printed matter that can be loaded on the transport device 30, the printed matter output by the printing device 10 is transported in a plurality of parts by the transport device 30. In this case, the post-processing instruction unit 95 acquires the number of transport operations required to start the post-processing and issues an instruction to start the post-processing in a case in which the printed matter has been transported the required number of times. The number of transport operations required to start the post-processing is calculated by the print job management unit 91. The print job management unit 91 calculates the number of transport operations required to start the post-processing on the basis of the information of the paper and the information of the processing step.

For example, in a case in which the printed matter is a leaflet and a process of folding the printed matters one by one is performed in the post-processing step, the number of transport operations required to start the post-processing is 1. In a case in which the post-processing can be started even in a stage in which only a part of the printed matter has been transported as described above, the post-processing instruction unit 95 issues an instruction to start the post-processing.

Meanwhile, for example, in a case in which the printed matter consists of a cover and contents to be bound, the cover and the contents may be transported separately. In this case, it is not possible to start the post-processing in a case in which only the cover has been transported first. The print job management unit 91 calculates how many times each of the cover and the contents is transported and calculates the number of transport operations required to start the post-processing. The post-processing instruction unit 95 issues an instruction to start the post-processing after the number of transport operations required to start the post-processing is completed and all of the printed matter is transported.

The communication unit 96 functions as an interface that is connected to the network, communicates with the printing management unit 60, the loading management unit 70, the transport management unit 80, and the post-processing device 40, and transmits and receives information. The communication unit 96 acquires, for example, positional information of the transport device 30 from the transport management unit 80.

The storage unit 97 stores a program for implementing various processes and data required to implement various processes. The storage unit 97 stores, for example, the capacity of the transport device 30.

In a case in which the overall management unit 90 shown in Fig. 3 is implemented by the computer 100 shown in Fig. 2, for example, the processor 101 executes a program to implement the functions of the print job management unit 91, the printing instruction unit 92, the loading instruction unit 93, the transport instruction unit 94, and the post-processing instruction unit 95. The functions of the communication unit 96 is implemented by, for example, the communication interface 104. The storage unit 97 is implemented by, for example, the ROM 102.

### <Process During Printing>

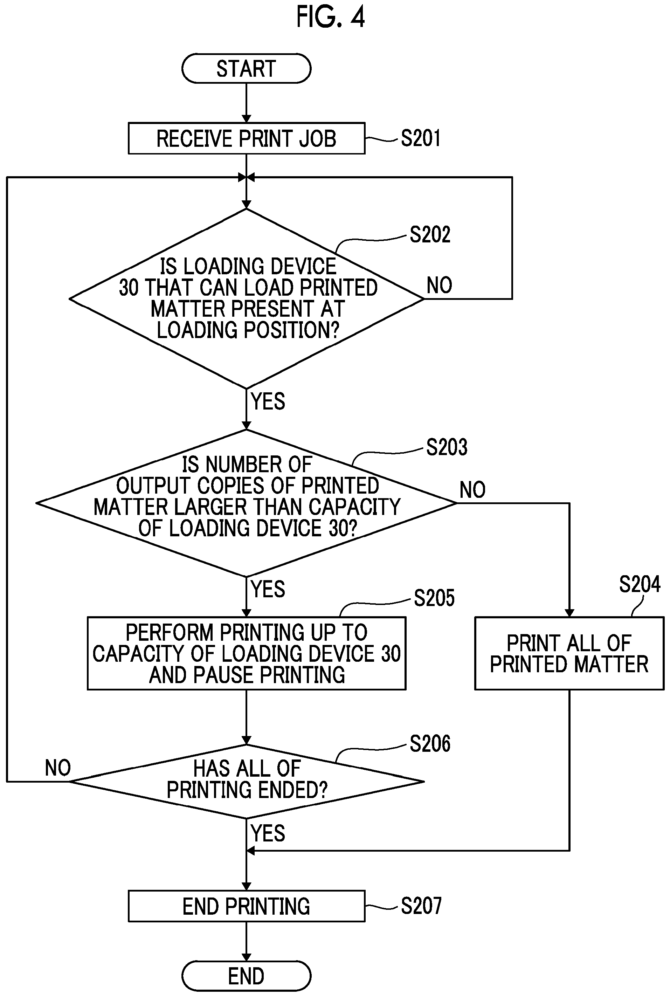

Next, a flow of a process during printing will be described with reference to Fig. 4. Fig. 4 is a flowchart showing an example of the flow of the process during printing.

In Fig. 4, first, the overall management unit 90 receives a print job (Step S201). In Step S201, the overall management unit 90 receives the print job through, for example, the communication unit 96 and stores the received print job in the storage unit 97.

Then, the overall management unit 90 determines whether or not the transport device 30 that can transport the printed matter is present at the loading position (Step S202). In Step S202, the overall management unit 90 acquires the positional information of the transport device 30 from the transport management unit 80 through the communication unit 96. The print job management unit 91 of the overall management unit 90 determines whether or not the transport device 30 that can transport the printed matter is present at the loading position on the basis of the acquired positional information.

In a case in which it is determined that the transport device 30 that can transport the printed matter is not present at the loading position (NO in Step S202), the process in Step S202 is repeated.

In a case in which it is determined that the transport device 30 that can transport the printed matter is present at the loading position (YES in Step S202), the overall management unit 90 determines whether or not the number of output copies of the printed matter is larger than the capacity of the transport device 30 (Step S203). In Step S203, the print job management unit 91 of the overall management unit 90 acquires the information of the paper from the print job stored in the storage unit 97. In addition, the print job management unit 91 acquires the capacity of the transport device 30 from the storage unit 97. Then, the print job management unit 91 determines whether or not the number of output copies of the printed matter is larger than the capacity of the transport device 30.

In a case in which it is determined that the number of output copies of the printed matter is smaller than the capacity of the transport device 30 (NO in Step S203), the printing instruction unit 92 of the overall management unit 90 issues an instruction to print all of the printed matter (Step S204). Then, the printing is ended (Step S207).

In a case in which it is determined that the number of output copies of the printed matter is larger than the capacity of the transport device 30 (YES in Step S203), the printing instruction unit 92 of the overall management unit 90 issues an instruction to perform printing up to the capacity of the transport device 30 and to pause the printing (Step S205). The print job management unit 91 of the overall management unit 90 determines whether or not all of the printing has been ended (Step S206). In a case in which all of the printing has been ended (YES in Step S206), the printing is ended (Step S207).

In a case in which all of the printing has not been ended (NO in Step S206), the process returns to Step S202 and is performed again along the flow.

### <Process of Starting Post-Processing>

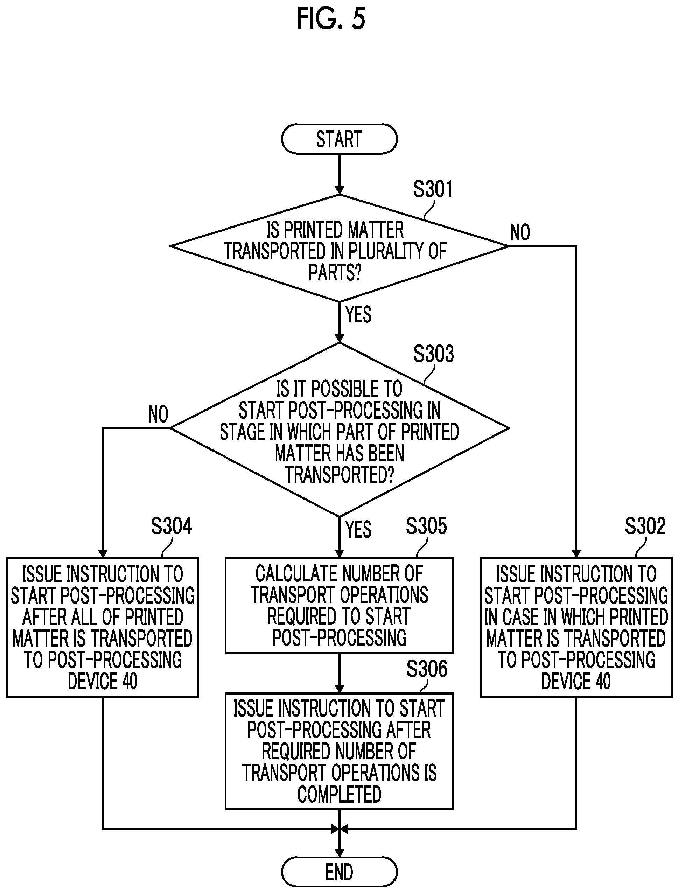

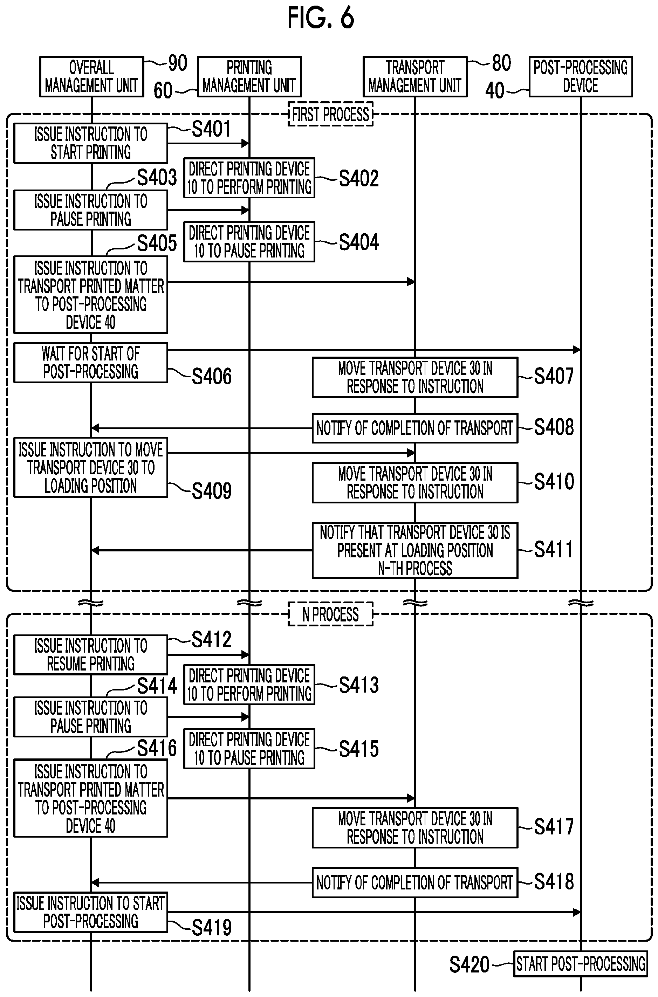

Next, a flow of a process from the start of printing to the start of post-processing will be described with reference to Figs. 5 and 6. Fig. 5 is a flowchart showing an example of a flow of a process of controlling the time when the post-processing is started. Fig. 6 is a sequence diagram showing an example of a flow of a process of the control unit 50 from the start of the printing to the start of the post-processing.

The flow of the process of controlling the time when the post-processing is started will be described with reference to Fig. 5.

In Fig. 5, first, the print job management unit 91 of the overall management unit 90 determines whether or not the printed matter is transported in a plurality of parts (Step S301). In Step S301, the print job management unit 91 acquires the information of the paper from the print job stored in the storage unit 97. In addition, the print job management unit 91 acquires the capacity of the transport device 30 from the storage unit 97. Then, the print job management unit 91 calculates how many times the printed matter is to be divided and transported.

In a case in which the printed matter is not transported in a plurality of parts (NO in Step S301), the post-processing instruction unit 95 of the overall management unit 90 issues an instruction to start the post-processing in a case in which the printed matter is transported to the post-processing device 40 (Step S302). Then, the process is ended. The post-processing device 40 starts the post-processing in response to the instruction from the post-processing instruction unit 95.

In a case in which the printed matter is transported in a plurality of parts (YES in Step S301), the print job management unit 91 of the overall management unit 90 determines whether or not it is possible to start the post-processing in a stage in which a part of the printed matter has been transported (Step S303). In Step S303, the print job management unit 91 acquires the information of the paper from the print job stored in the storage unit 97 and determines whether or not it is possible to start the post-processing in a stage in which a part of the printed matter has been transported.

A case in which it is not possible to start the post-processing in a stage in which a part of the printed matter has been transported is, for example, a case in which a cover and contents to be bound by the post-processing device 40 are transported by another transport device 30. A case in which it is possible to start the post-processing in a stage in which a part of the printed matter has been transported is, for example, a case in which the printed paper is folded one by one.

In a case in which it is determined that it is not possible to start the post-processing in a stage in which a part of the printed matter has been transported (NO in Step S303), the post-processing instruction unit 95 of the overall management unit 90 issues an instruction to start the post-processing after all of the printed matter is transported to the post-processing device 40 (Step S304). Then, the process is ended. The post-processing device 40 starts the post-processing in response to the instruction from the post-processing instruction unit 95.

In a case in which it is determined that it is possible to start the post-processing in a stage in which a part of the printed matter has been transported (YES in Step S303), the print job management unit 91 of the overall management unit 90 calculates the number of transport operations required to start the post-processing (Step S305).

Then, the post-processing instruction unit 95 of the overall management unit 90 issues an instruction to start the post-processing after the required number of transport operations is completed (Step S306), and the process is ended. The post-processing device 40 starts the post-processing in response to the instruction from the post-processing instruction unit 95.

Next, a flow of a process of the control unit 50 from the start of printing to the start of post-processing will be described with reference to Fig. 6. Fig. 6 shows a flow of a process in a case in which the printed matter is transported in a plurality of parts. Here, a case in which the post-processing device 40 starts the post-processing after the transport device 30 transports the printed matter N times will be described. In addition, in the example shown in Fig. 6, the loading device 20 is not provided. In a case in which the loading device 20 is provided, the overall management unit 90 instructs the loading device 20 to perform loading between the execution of printing and transport by the transport device 30.

In Fig. 6, first, the printing instruction unit 92 of the overall management unit 90 instructs the printing management unit 60 to start printing (Step S401). The printing management unit 60 directs the printing device 10 to perform printing on the basis of the printing instruction from the printing instruction unit 92 (Step S402). Then, in a case in which printing is performed up to the capacity of the transport device 30, the printing instruction unit 92 issues an instruction to pause the printing (Step S403). The printing management unit 60 directs the printing device 10 to pause the printing on the basis of the printing instruction from the printing instruction unit 92 (Step S404).

Then, the transport instruction unit 94 of the overall management unit 90 instructs the transport management unit 80 to transport the printed matter to the post-processing device 40 (Step S405). Then, the post-processing instruction unit 95 of the overall management unit 90 instructs the post-processing device 40 to wait for the start of the post-processing and not to start the post-processing even in a case in which the transport device 30 arrives at the post-processing device 40 (Step S406).

The transport management unit 80 moves the transport device 30 in response to the transport instruction from the transport instruction unit 94 (Step S407). In a case in which the transport of the printed matter to the post-processing device 40 is completed, the transport management unit 80 notifies the overall management unit 90 that the transport has been completed (Step S408).

Then, the transport instruction unit 94 of the overall management unit 90 instructs the transport management unit 80 to move the transport device 30 to the loading position (Step S409). The transport management unit 80 moves the transport device 30 on the basis of the transport instruction from the transport instruction unit 94 (Step S410). Then, in a case in which the transport device 30 arrives at the loading position, the transport management unit 80 notifies the overall management unit 90 that the transport device 30 is located at the loading position (Step S411).

A process corresponding to one transport operation in which the transport device 30 transports the printed matter output by the printing device 10 to the post-processing device 40 is completed by the process from Step S401 to Step S411. In the example shown in Fig. 6, the post-processing device 40 starts the post-processing after the transport device 30 transports the printed matter N times. The process from Step S401 to Step S411 is repeated until the post-processing device 40 starts the post-processing. After a process from Step S412 to Step S419 shown in Fig. 6 is performed in an N-th process, the post-processing is started.

In the N-th process, first, the printing instruction unit 92 of the overall management unit 90 instructs the printing management unit 60 to resume the printing (Step S412). A process from Step S413 to Step S416 is performed in the same manner as the process from Step S402 to Step S405 in the first process. Then, the transport management unit 80 moves the transport device 30 in response to the instruction from the transport instruction unit 94 (Step S417) and notifies the overall management unit 90 that the transport has been completed (Step S418).

Then, the transport instruction unit 94 of the overall management unit 90 instructs the post-processing device 40 to start the post-processing (Step S419). The post-processing device 40 starts the post-processing in response to the instruction from the overall management unit 90 (Step S420).

In addition, the flow of the process of the control unit 50 from the start of the printing to the start of the post-processing is not limited to the example shown in Fig. 6. For example, the post-processing start waiting instruction in Step S406 may not be issued, and only the post-processing start instruction in Step S419 may be issued to the post-processing device 40. Further, an instruction to start the post-processing may be issued first after the transport device 30 performs transport N times, and the post-processing device 40 may start the post-processing after the N-th transport is ended.

Although the exemplary embodiments of the present invention have been described above, the technical scope of the present invention is not limited to the scope described in the above-described exemplary embodiments. It is clear from the claims that combinations of two or more of the above-described exemplary embodiments and various modifications or improvements of the above-described exemplary embodiments are also included in the technical scope of the present invention.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

1: printing system
10: printing device
20: loading device
30: transport device
40: post-processing device
50: control unit
60: printing management unit
70: loading management unit
80: transport management unit
90: overall management unit
100: computer

## Claims

1. A control unit (50) configured to control an overall operation of a printing device (10) that performs printing on the basis of a given instruction and outputs a printed matter, a transport device (30) that transports the printed matter output by the printing device (10) in a loaded state, and a post-processing device (40) that performs post-processing on the printed matter transported by the transport device (30), **characterized in that**
it stops the printing by the printing device (10) in a case in which the transport device (30) is not present at a position where the printed matter is loaded, **in that**
it acquires a transport situation based on a movement of the transport device (30) from a loading position of the printing device (10) to a position after the transport device (30) has moved to the post-processing device (40), and controls a process in the post-processing device (40) from the acquired transport situation, and
it calculates a capacity of the printed matter that is capable of being loaded on the transport device (30) and directs the printing device (10) to perform the printing up to the capacity of the printed matter that is capable of being loaded on the transport device (30) and to pause the printing in a case in which an output amount of the printed matter output by the printing device (10) is larger than the capacity of the printed matter that is capable of being loaded on the transport device (30).

2. A printing system (1) comprising:
a printing device (10) that performs printing on the basis of a given instruction and outputs a printed matter;
a transport device (30) that transports the printed matter output by the printing device (10) in a loaded state;
a post-processing device (40) that performs post-processing on the printed matter transported by the transport device (30); and
the control unit (50) according to claim 1.

3. The printing system (1) according to claim 21,
wherein the control unit (50) controls a start of the post-processing in the post-processing device (40).

4. The printing system (1) according to claim 3,
wherein the control unit (50) acquires the number of transport operations required to start the post-processing in a case in which the printed matter output by the printing device (10) is transported in a plurality of parts by the transport device (30) and starts the post-processing in a case in which the printed matter has been transported the required number of times.

5. The printing system (1) according to claim 4,
wherein the control unit (50) starts the post-processing in a case in which it is possible to start the post-processing even in a stage in which only a part of the printed matter has been transported.

6. The printing system (1) according to claim 4,
wherein the control unit (50) starts the post-processing after all of the printed matter is transported.

7. The printing system (1) according to claim 2,
wherein the transport situation of the transport device (30) is a position of the transport device (30).

8. The printing system (1) according to claim 2,
wherein the control unit (50) directs the printing device (10) to resume the printing in a case in which a new transport device (30) that is capable of transporting the printed matter is present at the position where the printed matter is loaded in a state in which the printing by the printing device (10) is paused.

9. The printing system (1) according to claim 2,
wherein the control unit (50) controls an output order in which the printing device (10) outputs the printed matter.

10. The printing system (1) according to claim 9,
wherein the control unit (50) directs the printing device (10) to output the printed matter in descending order of a paper size of the printed matter.

11. A printing method comprising:
performing, by a printing device (10), printing on the basis of a given instruction and outputting a printed matter;
transporting, by a transport device (30), the printed matter output in the printing in a loaded state; and
performing, by a post-processing device (40), post-processing on the printed matter transported by the transport device (30),
**characterized in that** a control unit (50) stops the printing by the printing device (10) in a case in which the transport device (30) is not present at a position where the printed matter is loaded, **in that** the control unit (50) acquires a transport situation based on a movement of the transport device (30) from a loading position of the printing device (10) to a position after the transport device (30) has moved to the post-processing device (40) and controls a process in the post-processing device (40) from the acquired transport situation and
the control unit (50) calculates a capacity of the printed matter that is capable of being loaded, and **in that** the method further comprises:
performing the printing up to the capacity of the printed matter that is capable of being loaded and pausing the printing in a case in which an output amount of the printed matter output is larger than the capacity of the printed matter that is capable of being loaded.

## Patentansprüche

1. Steuereinheit (50), die so konfiguriert ist, dass sie einen Gesamtbetrieb einer Druckvorrichtung (10), die Drucken auf der Grundlage einer gegebenen Anweisung durchführt und ein gedrucktes Material ausgibt, einer Transportvorrichtung (30), die das von der Druckvorrichtung (10) ausgegebene gedruckte Material in einem geladenen Zustand transportiert, und einer Nachverarbeitungsvorrichtung (40), die Nachverarbeitung an dem von der Transportvorrichtung (30) transportierten gedruckten Material durchführt, steuert, **dadurch gekennzeichnet, dass**
sie das Drucken durch die Druckvorrichtung (10) in einem Fall stoppt, in dem die Transportvorrichtung (30) nicht an einer Position vorhanden ist, an der das gedruckte Material geladen wird, dadurch dass
sie eine Transportsituation auf der Grundlage einer Bewegung der Transportvorrichtung (30) von einer Ladeposition der Druckvorrichtung (10) zu einer Position, nachdem sich die Transportvorrichtung (30) zu der Nachverarbeitungsvorrichtung (40) bewegt hat, erfasst und einen Prozess in der Nachverarbeitungsvorrichtung (40) aus der erfassten Transportsituation steuert, und
sie eine Kapazität des gedruckten Materials, das auf der Transportvorrichtung (30) geladen werden kann, berechnet und die Druckvorrichtung (10) anweist, das Drucken bis zu der Kapazität des gedruckten Materials, das auf der Transportvorrichtung (30) geladen werden kann, durchzuführen und das Drucken in einem Fall, in dem eine Ausgabemenge des von der Druckvorrichtung (10) ausgegebenen gedruckten Materials größer als die Kapazität des gedruckten Materials, das auf der Transportvorrichtung (30) geladen werden kann, ist, zu pausieren.

2. Drucksystem (1), umfassend:
eine Druckvorrichtung (10), die Drucken auf der Grundlage einer gegebenen Anweisung durchführt und ein gedrucktes Material ausgibt;
eine Transportvorrichtung (30), die das von der Druckvorrichtung (10) ausgegebene gedruckte Material in einem geladenen Zustand transportiert;
eine Nachverarbeitungsvorrichtung (40), die Nachverarbeitung an dem von der Transportvorrichtung (30) transportierten gedruckten Material durchführt; und
die Steuereinheit (50) nach Anspruch 1.

3. Drucksystem (1) nach Anspruch 21,
wobei die Steuereinheit (50) einen Start der Nachverarbeitung in der Nachverarbeitungsvorrichtung (40) steuert.

4. Drucksystem (1) nach Anspruch 3,
wobei die Steuereinheit (50) die Anzahl an Transportvorgängen, die erforderlich sind, um die Nachverarbeitung in einem Fall zu starten, in dem das von der Druckvorrichtung (10) ausgegebene gedruckte Material in mehreren Teilen von der Transportvorrichtung (30) transportiert wird, erfasst und die Nachverarbeitung in einem Fall startet, in dem das gedruckte Material die erforderliche Anzahl an Malen transportiert worden ist.

5. Drucksystem (1) nach Anspruch 4,
wobei die Steuereinheit (50) die Nachverarbeitung in einem Fall startet, in dem es möglich ist, die Nachverarbeitung selbst in einer Phase zu starten, in der nur ein Teil des gedruckten Materials transportiert worden ist.

6. Drucksystem (1) nach Anspruch 4,
wobei die Steuereinheit (50) die Nachverarbeitung startet, nachdem das gesamte gedruckte Material transportiert worden ist.

7. Drucksystem (1) nach Anspruch 2,
wobei die Transportsituation der Transportvorrichtung (30) eine Position der Transportvorrichtung (30) ist.

8. Drucksystem (1) nach Anspruch 2,
wobei die Steuereinheit (50) die Druckvorrichtung (10) anweist, das Drucken in einem Fall, in dem eine neue Transportvorrichtung (30), die das gedruckte Material transportieren kann, an der Position vorhanden ist, an der das gedruckte Material in einem Zustand, in dem das Drucken durch die Druckvorrichtung (10) pausiert ist, geladen wird, wieder aufzunehmen.

9. Drucksystem (1) nach Anspruch 2,
wobei die Steuereinheit (50) eine Ausgabereihenfolge, in der die Druckvorrichtung (10) das gedruckte Material ausgibt, steuert.

10. Drucksystem (1) nach Anspruch 9,
wobei die Steuereinheit (50) die Druckvorrichtung (10) anweist, das gedruckte Material in absteigender Reihenfolge einer Papiergröße des gedruckten Materials auszugeben.

11. Druckverfahren, umfassend:
Durchführen, durch eine Druckvorrichtung (10), von Drucken auf der Grundlage einer gegebenen Anweisung und Ausgeben eines gedruckten Materials;
Transportieren, durch eine Transportvorrichtung (30), des gedruckten Materials, das bei dem Drucken ausgegeben worden ist, in einem geladenen Zustand; und
Durchführen, durch eine Nachverarbeitungsvorrichtung (40), von Nachverarbeitung an dem von der Transportvorrichtung (30) transportierten gedruckten Material,
**dadurch gekennzeichnet, dass** eine Steuereinheit (50) das Drucken durch die Druckvorrichtung (10) in einem Fall stoppt, in dem die Transportvorrichtung (30) nicht an einer Position vorhanden ist, an der das gedruckte Material geladen wird, dadurch dass die Steuereinheit (50) eine Transportsituation auf der Grundlage einer Bewegung der Transportvorrichtung (30) von einer Ladeposition der Druckvorrichtung (10) zu einer Position, nachdem sich die Transportvorrichtung (30) zu der Nachverarbeitungsvorrichtung (40) bewegt hat, erfasst und einen Prozess in der Nachverarbeitungsvorrichtung (40) aus der erfassten Transportsituation steuert, und die Steuereinheit (50) eine Kapazität des gedruckten Materials, das geladen werden kann, berechnet, und dass das Verfahren ferner umfasst:
Durchführen des Druckens bis zu der Kapazität des gedruckten Materials, das geladen werden kann, und Pausieren des Druckens in einem Fall, in dem eine Ausgabemenge des ausgegebenen gedruckten Materials größer als die Kapazität des gedruckten Materials, das geladen werden kann, ist.

## Revendications

1. Unité de contrôle (50) configurée pour contrôler un fonctionnement global d'un dispositif d'impression (10) qui effectue une impression sur la base d'une instruction donnée et produit une matière imprimée, d'un dispositif de transport (30) qui transporte la matière imprimée produite par le dispositif d'impression (10) dans un état chargé, et d'un dispositif de post-traitement (40) qui effectue un post-traitement sur la matière imprimée transportée par le dispositif de transport (30), **caractérisée en ce que** elle arrête l'impression par le dispositif d'impression (10) dans un cas où le dispositif de transport (30) n'est pas présent à une position où la matière imprimée est chargée, **en ce que**
elle acquiert une situation de transport sur la base d'un mouvement du dispositif de transport (30) d'une position de chargement du dispositif d'impression (10) à une position après que le dispositif de transport (30) s'est déplacé vers le dispositif de post-traitement (40), et contrôle un processus dans le dispositif de post-traitement (40) à partir de la situation de transport acquise, et
elle calcule une capacité de la matière imprimée qui est capable d'être chargée sur le dispositif de transport (30) et dirige le dispositif d'impression (10) pour effectuer l'impression jusqu'à la capacité de la matière imprimée qui est capable d'être chargée sur le dispositif de transport (30) et pour mettre en pause l'impression dans un cas où une quantité de sortie de la matière imprimée produite par le dispositif d'impression (10) est supérieure à la capacité de la matière imprimée qui est capable d'être chargée sur le dispositif de transport (30).

2. Système d'impression (1) comprenant :
un dispositif d'impression (10) qui effectue une impression sur la base d'une instruction donnée et produit une matière imprimée ;
un dispositif de transport (30) qui transporte la matière imprimée produite par le dispositif d'impression (10) dans un état chargé ;
un dispositif de post-traitement (40) qui effectue un post-traitement sur la matière imprimée transportée par le dispositif de transport (30) ; et
l'unité de contrôle (50) selon la revendication 1.

3. Système d'impression (1) selon la revendication 21,
dans lequel l'unité de contrôle (50) contrôle un début du post-traitement dans le dispositif de post-traitement (40).

4. Système d'impression (1) selon la revendication 3,
dans lequel l'unité de contrôle (50) acquiert le nombre d'opérations de transport nécessaires pour démarrer le post-traitement dans un cas où la matière imprimée produite par le dispositif d'impression (10) est transportée en une pluralité de parties par le dispositif de transport (30) et démarre le post-traitement dans un cas où la matière imprimée a été transportée le nombre requis de fois.

5. Système d'impression (1) selon la revendication 4,
dans lequel l'unité de contrôle (50) démarre le post-traitement dans un cas où il est possible de démarrer le post-traitement même dans une étape où seule une partie de la matière imprimée a été transportée.

6. Système d'impression (1) selon la revendication 4,
dans lequel l'unité de contrôle (50) démarre le post-traitement après que toute la matière imprimée a été transportée.

7. Système d'impression (1) selon la revendication 2,
dans lequel la situation de transport du dispositif de transport (30) est une position du dispositif de transport (30).

8. Système d'impression (1) selon la revendication 2,
dans lequel l'unité de contrôle (50) dirige le dispositif d'impression (10) pour reprendre l'impression dans un cas où un nouveau dispositif de transport (30) qui est capable de transporter la matière imprimée est présent à la position où la matière imprimée est chargée dans un état où l'impression par le dispositif d'impression (10) est mise en pause.

9. Système d'impression (1) selon la revendication 2,
dans lequel l'unité de contrôle (50) contrôle un ordre de sortie dans lequel le dispositif d'impression (10) produit la matière imprimée.

10. Système d'impression (1) selon la revendication 9,
dans lequel l'unité de contrôle (50) dirige le dispositif d'impression (10) pour produire la matière imprimée dans un ordre décroissant d'une taille de papier de la matière imprimée.

11. Procédé d'impression comprenant :
effectuer, par un dispositif d'impression (10), une impression sur la base d'une instruction donnée et produire une matière imprimée ;
transporter, par un dispositif de transport (30), la matière imprimée produite dans l'impression dans un état chargé ; et
effectuer, par un dispositif de post-traitement (40), un post-traitement sur la matière imprimée transportée par le dispositif de transport (30),
**caractérisé en ce qu'**une unité de contrôle (50) arrête l'impression par le dispositif d'impression (10) dans un cas où le dispositif de transport (30) n'est pas présent à une position où la matière imprimée est chargée, **en ce que** l'unité de contrôle (50) acquiert une situation de transport sur la base d'un mouvement du dispositif de transport (30) d'une position de chargement du dispositif d'impression (10) à une position après que le dispositif de transport (30) s'est déplacé vers le dispositif de post-traitement (40) et contrôle un processus dans le dispositif de post-traitement (40) à partir de la situation de transport acquise et
l'unité de contrôle (50) calcule une capacité de la matière imprimée qui est capable d'être chargée, et **en ce que** le procédé comprend en outre :
effectuer l'impression jusqu'à la capacité de la matière imprimée qui est capable d'être chargée et mettre en pause l'impression dans un cas où une quantité de sortie de la matière imprimée produite est supérieure à la capacité de la matière imprimée qui est capable d'être chargée.
